Europäisches Patentamt

European Patent Office

Office européen des brevets

(11) Numéro de publication: **0 068 995**
**A1**

# (12) DEMANDE DE BREVET EUROPEEN

(21) Numéro de dépôt: 82401120.9

(22) Date de dépôt: 18.06.82

(51) Int. Cl.³: **G 11 B 5/221**, G 11 B 5/28

(30) Priorité: 19.06.81 FR 8112142

(43) Date de publication de la demande: 05.01.83
Bulletin 83/1

(84) Etats contractants désignés: **AT DE IT NL**

(71) Demandeur: **THOMSON-CSF, 173, Boulevard Haussmann, F-75379 Paris Cedex 08 (FR)**

(72) Inventeur: **Nicolas, Jean, THOMSON-CSF SCPI 173, bld Haussmann, F-75379 Paris Cedex 08 (FR)**

(74) Mandataire: **Taboureau, James et al, THOMSON-CSF SCPI 173, Bld Haussmann, F-75379 Paris Cedex 08 (FR)**

(54) Tête magnétique pour écriture, lecture et effacement sur piste magnétique étroite, et procédé de fabrication de cette tête magnétique, simple ou multipiste.

(57) L'invention concerne les têtes magnétiques destinées à exploiter des pistes très étroites (30 à 50 μ) sur supports magnétiques défilant.

Tandis qu'une tête magnétique classique comporte une face de travail constituée d'un matériau magnétique dans lequel se trouve un fin entrefer non magnétique, la tête magnétique selon l'invention comporte au contraire une face de travail constituée d'un matériau non magnétique (10+11+12) dans lequel sont incluses deux fines couches magnétiques (7), séparées par un entrefer, et perpendiculaires à la face de travail. Cette tête est obtenue en liant par pressage à chaud sur une tranche (21) de matériau non magnétique une lame (20) elle-même composée de couches magnétiques (16) et non magnétique (17): la lame (20) ainsi supportée est rodée jusqu'à obtenir une épaisseur égale à la largeur de piste.

Application aux têtes multiples et multipistes, pour l'informatique et l'audiovisuel.

# TETE MAGNETIQUE POUR ECRITURE, LECTURE ET EFFACEMENT
## SUR PISTE MAGNETIQUE ETROITE, ET PROCEDE
## DE FABRICATION DE CETTE TETE MAGNETIQUE,
## SIMPLE OU MULTIPISTE

La présente invention concerne une tête magnétique pour écriture, lecture et effacement sur piste magnétique étroite défilante, ainsi que le procédé de fabrication d'une telle tête magnétique. L'invention et le procédé de réalisation correspondant, s'applique soit à une tête simple monopiste, soit à une tête multiple, multipiste destinée à l'exploitation de supports magnétiques comportant un grand nombre de pistes étroites tels que par exemple les supports magnétiques utilisés en informatique ou dans les moyens vidéo, dont le nombre de pistes parallèles entre elles atteint et dépasse même la valeur 50.

Une tête magnétique comprend un circuit ferromagnétique à grande perméabilité, en forme d'anneau, refermée sur un entrefer non magnétique, dans lequel est recueilli un champ magnétique extérieur (tête de lecture) ou au contraire dans lequel est produit un champ magnétique (tête d'écriture ou d'effacement) au moyen d'une bobine supportée par le circuit ferromagnétique. Pour la commodité de la fabrication, le circuit magnétique est, comme déjà décrit par exemple dans le brevet français N° 74.30 336 de la Demanderesse, constitué de deux parties : la face antérieure ou de travail comprend les deux becs de l'anneau délimitant un entrefer, en forme de fente orientée suivant une perpendiculaire à la direction de déplacement du support, et l'armature, partie postérieure du circuit, supportant la ou les bobines.

La réalisation de la face antérieure est relativement aisée tant qu'il s'agit de largeurs de piste, sur le support défilant, qui se mesurent en millimètre ou même en fraction de millimètre, et que la distance entre deux pistes voisines est du même ordre de grandeur. Par contre, elle devient extrêmement aléatoire, voire irréalisable, lorsque pour que des applications informatiques ou vidéo, la largeur de chaque piste, et l'intervalle entre deux pistes voisines, est aussi faible que par exemple 20 à 30 microns avec une largeur d'entrefer correspondante de l'ordre de 0,3 micron.

On sait réaliser des entrefers extrêmement fins par des procédés qui ont été révélés, mais réaliser une tête magnétique dont la largeur serait de l'ordre de 30 microns envirion, n'est pas possible puisqu'une telle tête serait fragile, et ne pourrait pas travailler avec fiabilité. C'est pour résoudre ce problème qu'a été mise au point le structure de tête magnétique selon l'invention, ainsi que le procédé de réalisation correspondant.

Si l'on considère une tête magnétique selon l'art connu, la face antérieure ou face de travail est constituée par deux becs, en matériau magnétique présentant entre eux une discontinuité qui est constituée par l'entrefer en matériau non magnétique. La culasse ou partie postérieure du circuit referme sur lui-même l'anneau magnétique formant la tête. Les dimensions des deux becs permettent aux matériaux d'assurer la solidité de la tête magnétique.

Bien au contraire dans la tête selon l'invention, la face de travail est constituée par un bloc monolithique de matériau non magnétique, ce bloc présentant une discontinuité qui est constituée par les deux becs en matériau magnétique. Ainsi, l'entrefer étroit, non magnétique, entre les deux becs magnétiques, constitue un pont entre deux parties latérales larges non magnétiques : ceci confère à la partie centrale, laquelle constitue à proprement parler la tête magnétique, une solidité qui lui permet de devenir un outil de travail efficace et qui n'est plus fragile.

Pour réaliser une telle tête, le procédé de réalisation selon l'invention consiste à fabriquer selon un processus analogue à celui révélé par le brevet français N° 74.30 336 de la Demanderesse, un bloc constitué de couches de ferrite magnétique et non magnétique alternées, les couches de ferrite non magnétique ayant l'épaisseur de l'entrefer désiré, à découper dans ce bloc une lame d'épaisseur suffisante pour qu'elle soit manipulable et non fragile et à fixer cette lame contre une première tranche latérale, elle-même découpée dans un second bloc constitué de couches de ferrite magnétique et non magnétique, la direction des couches de la lame étant perpendiculaire à la direction des couches de la première tranche, puis, à usiner par rodage la lame ainsi supportée par la première tranche latérale jusqu'à lui conférer une épaisseur égale à la largeur de piste requise, et fixer contre la face libre de la lame une seconde tranche latérale identique à la première, et enfin à usiner le bloc composite mais monolithique ainsi obtenu pour lui communiquer une face antérieure polie et une face postérieure munie d'une gorge, en vue de compléter la tête magnétique par une armature ou culasse qui referme le circuit magnétique et par une bobine.

De façon plus précise, l'invention concerne une tête magnétique pour écriture, lecture et effacement sur piste magnétique étroite portée par un support défilant, constituée par un circuit magnétique en forme d'anneau comportant une partie postérieure ou culasse qui supporte au moins un bobinage, et une partie antérieure comportant deux becs séparés par un entrefer, cette tête magnétique étant caractérisé en ce que la face de travail de sa partie antérieure, en contact avec le support défilant, est constituée par une pièce monolithique non magnétique partiellement interrompue par deux fines lames magnétiques, dans le prolongement l'une de l'autre, orientées dans le sens de défilement du support défilant, et d'une épaisseur égale à la largeur de la piste magnétique, ces deux lames magnétiques étant séparées l'une de l'autre par un entrefer non magnétique qui constitue un pont entre les deux parties de la surface non magnétique de travail.

L'invention sera mieux comprise au moyen des exemples de réalisation dont la description suit, lesquelles s'appuient sur les figures jointes qui représentent :

Figure 1 : une tête magnétique selon une invention antérieure de la Demanderesse (Brevet français N° 74.30 336) ;

Figure 2 : une tête magnétique selon la présente invention en vue éclatée ;

Figures 3 à 7 : fabrication du bloc composite mais monolithique dans lequel sont fabriquées en série les têtes magnétiques selon l'invention ;

Figure 8 : une tête magnétique selon l'invention telle qu'obtenue à l'issue des opérations de fabrication selon les figures précédentes ;

Figure 9 :        tête multiple multipistes selon l'invention obtenue par le procédé de réalisation ;

Figures 10 et 11 :    une première variante pour l'obtention de tête multiple et multipistes selon l'invention ;

Figures 12 et 13 :    une seconde variante pour l'obtention de tête multiple et multipistes selon l'invention.

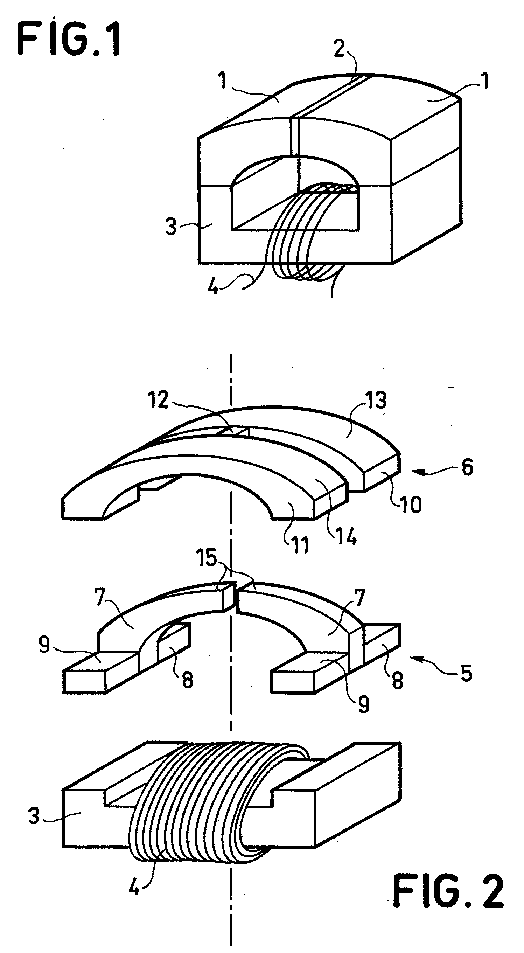

La figure 1 représente une tête magnétique pour écriture, lecture et effacement sur piste magnétique, selon le brevet de la Demanderesse cité plus haut, et cette figure a pour fonction essentielle de définir l'objet de l'invention.

Cette tête magnétique est essentiellement composée de deux parties : une partie antérieure qui comporte les deux becs (1) en matériau magnétique, séparés entre eux par un mince entrefer (2) en matériau non magnétique, et une partie postérieure essentiellement constituée par ce que l'on appelle la culasse 3 qui porte un bobinage tel que schématisé en 4 ou deux bobinages sur les deux bras latéraux de la culasse. L'ensemble de la partie antérieure et de la partie postérieure définit donc un anneau magnétique qui comporte une discontinuité dans le matériau magnétique, cette discontinuité étant l'entrefer 2.

On sait de plusieurs façons différentes réaliser des entrefers dont l'épaisseur est extrêmement fine. Les tous premiers entrefers étaient réalisés au moyen d'une feuille d'un métal non magnétique intercalé entre deux becs en tôle magnétique, puis ont été découverts les entrefers composés d'une couche de verre et finalement les entrefers réalisés par dépôts de couches minces de différentes natures. Par conséquent, l'épaisseur de l'entrefer ne pose pas de difficultés, bien que la technologie devienne délicate lorsqu'il s'agit de réaliser des entrefers de l'ordre de 0,3 micron d'épaisseur, puisque les techniques sont connues. Par contre réaliser une tête magnétique dont la largeur, c'est-à-dire la longueur de l'entrefer, corresponde à des pistes magnétiques de 30 microns est un problème qui n'a pas encore trouvé de solution industriellement intéressante. Des essais sont menés actuellement pour réaliser des têtes magnétiques dont la largeur de piste de lecture, c'est-à-dire la longueur de l'entrefer, est voisine de 50 à 30 microns par usinage et polissage d'une tête classique qui est en quelque sorte usée jusqu'à ce que sa face en contact avec le support défilant n'ait plus que 30 ou 50 microns de largeur ; mais cette technologie est extrêment délicate. C'est donc l'objet de l'invention que de mettre au point une tête magnétique dont la largeur de lecture corresponde à des pistes extrêment fines, de 30 à 50 microns, voire moins, et qui soit à la fois réalisable selon une technologie simple, et suffisamment solide pour pouvoir offrir un service fiable.

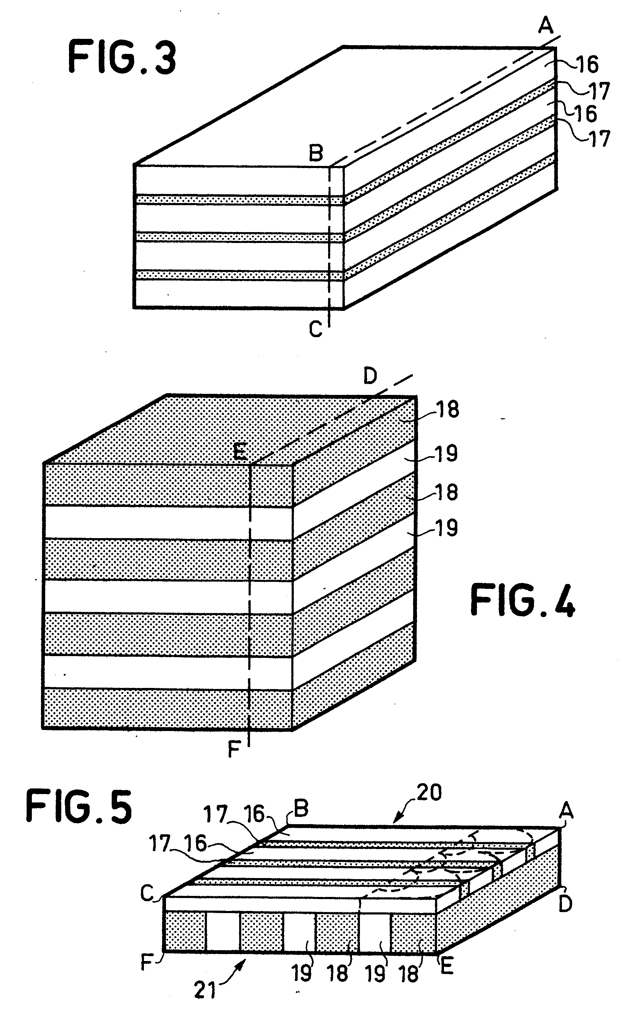

La figure 2 représente une tête magnétique selon l'invention en vue éclatée de façon à mieux en montrer à la fois les constituants et la structure. Le respect intégral des cotes n'est pas possible sur cette figure, puisque si la face de travail a des dimensions latérales qui sont d'environ un à quelques millimètres, la partie active de la face antérieure comprise dans cette face de travail a une épaisseur de 30 microns : par conséquent, la partie active a été volontairement élargie de façon à être rendue visible.

La tête magnétique selon l'invention, ainsi représentée en éclaté sur la figure 2, comporte une partie postérieure composée de la culasse 3 et de la bobine 4, et une partie antérieure composée d'un ensemble de pièces magnétiques 5 et d'un ensemble de pièces non magnétiques 6.

L'ensemble 5 de pièces magnétiques constitue ce que par convention on appellera le volume actif de la tête magnétique : elle est composée de deux becs 7 en matériau magnétique qui ont une largeur de 30 à 50 microns, sans que ces dimensions ne constituent une limite au domaine de l'invention, des largeurs plus faibles étant réalisables suivant les mêmes principes. Les deux becs 7 sont séparés par une discontinuité dite entrefer et ils sont solidaires, à leur base du côté de la culasse 3, chacun, de deux embases 8 et 9 qui constituent un adaptateur entre la largeur de la culasse et la largeur de chaque bec ; les embases 8 et 9 sont également en matériau magnétique.

L'ensemble 6 est constitué de matériau non magnétique. Il comporte deux blocs d'appui 10 et 11 en matériau non magnétique et un entrefer 12 en matériau non magnétique également, qui relie entre eux les deux blocs d'appui. Les deux blocs d'appui constituent des régions latérales neutres par rapport à la tête magnétique en ce sens que ces deux blocs d'appui n'interviennent pas dans le fonctionnement de la tête magnétique mais constituent des contre-forts à la partie active constituée par les deux becs 7, laquelle se briserait en raison de la finesse si les blocs d'appui n'étaient là pour la consolider.

Lorsque la tête magnétique selon l'invention est montée, les différentes faces en regard de la culasse 3 et des becs 7 et embases 8 et 9 viennent en contact. De la même façon les faces en regard des blocs d'appui 10 et 11 viennent en contact avec la surface supérieure des embases 8 et 9, et en contact avec les becs 7 : le tout est rendu solidaire par pressage à chaud au cours du procédé de fabrication, ce qui fait que la tête est en fait monolithique bien que composite dans ses matériaux. Les faces antérieures 13 et 14 des deux blocs d'appui et 15 des deux becs sont polies et mises en forme simultanément et ce sont elles qui constituent la face de travail de la tête magnétique, en contact avec le support défilant.

Les figures suivantes 3 à 7 représentent les différentes étapes de la réalisation d'une tête magnétique selon l'invention.

Sur la figure 3 est représenté un premier bloc qui, en vue de simplifier le texte, sera appelé conventionnellement un bloc actif. En effet ce bloc est constitué par l'empilement de couches 16 de ferrite magnétique et 17 de ferrite non magnétique. De façon à rendre la figure plus simple et plus claire, un empilement relativement réduit a été représenté, dans lequel on s'est limité à trois couches 17 de ferrite non magnétique. Ce bloc est obtenu selon des procédés connus, par l'empilement de feuilles de ferrite 16 sur lesquelles ont été déposées de fines couches de ferrite 17 non magnétique par exemple par un procédé tel que la pulvérisation cathodique. L'empilement est soumis à un collage par l'action combinée de la température et d'une pression exercée selon une direction perpendiculaire au plan des feuilles de ferrites.

L'épaisseur des couches de ferrite non magnétique 17 est égale à l'épaisseur de l'entrefer désiré dans la tête magnétique à fabriquer, c'est-à-dire pour reprendre les chiffres qui ont été cités, de l'ordre de 0,3 micron par exemple sans que cette précision apporte une limitation à l'invention. L'épaisseur des feuilles de ferrite magnétique 16 est sensiblement égale à la largeur de la tête magnétique à fabriquer, de telle sorte que si le bloc de la figure 3 est utilisé pour fabriquer une tête multiple, à trois pistes par exemple, la distance entre chacune des pistes sera égale à la largeur d'une tête magnétique. Si au contraire ce bloc est utilisé pour la fabrication de tête magnétique simple monopiste, la largeur de la tête magnétique est égale à la largeur d'un entrefer 17 plus deux demi-épaisseur de feuilles 16.

A partir du bloc actif tel que représenté sur cette figure 3, une lame est découpée selon un plan seccant par rapport au plan des couches de ferrites. Cette découpe a été symbolisée sur la figure 3 par les lignes pointillées A, B, C. L'épaisseur de la lame obtenue est suffisante pour que cette lame soit manipulable sans être fragile et néanmoins supérieure à la largeur de la piste magnétique à lire ou à écrire sur le support défilant.

La figure 4 représente la seconde étape de la réalisation des têtes magnétiques selon l'invention. Comme sur la figure 1 et par convention les matériaux magnétiques sont représentés en blanc et les matériaux non magnétiques représentés en pointillés.

Sur la figure 4, est représenté un second bloc qu'on conviendra d'appeler par convention bloc d'appui de façon à le différencier du bloc actif précédent. Ce bloc d'appui est réalisé par l'empilement et le collage par pressage à chaud de plaques de ferrites non magnétique 18 et magnétique 19 alternées.

Lorsque le bloc est réalisé et que par pressage à chaud, il est devenu monolithique, une tranche y est sciée selon un angle perpendiculaire au plan des couches de ferrite : le sciage est symbolisé sur la figure 4 par la ligne pointillé DEF.

Dans ce bloc dit d'appui l'épaisseur des couches de ferrites non magnétique 18 est égale à l'épaisseur des blocs d'appui 10 et 11 tels qu'il sont représentés sur la figure 2 et l'épaisseur des couches de ferrite magnétique 19 est égale à l'épaisseur des embases 8 et 9 représentées sur la même figure 2. La tranche obtenue par sciage selon le plan D E F a, quant à elle, une épaisseur qui est égale à la demi-largeur de la tête magnétique à fabriquer.

Selon la figure 5, une lame découpée dans le bloc actif de la figure 3 est plaquée sur une tranche découpée dans le bloc d'appui de la figure 4. La lame 20 et la tranche 21 préalablement rodées et polies sur les faces venant en regard sont solidarisées par pressage à chaud, la pression uniaxiale étant appliquée perpendiculairement au plan de ces lame et tranche. Il faut remarquer que la lame 20 est présentée par rapport à la tranche 21 de telle façon que les "fibres" non magnétiques de la lame 20 sont perpendiculaires par rapport aux "fibres" non magnétiques de la tranche 21. La représentation sur la figure 5 des plans de sciage A, B, C pour la lame et D, E, F pour la tranche aide à voir comment les deux pièces se présentent l'une par rapport à l'autre. Après frittage de la lame sur la tranche, l'ensemble rigide est soumis à usinage et à polissage, qui use la lame 20 jusqu'à ce que celle-ci ait une épaisseur égale à la largeur de la piste à exploiter sur un support magnétique. Ainsi dans un premier temps, c'est-à-dire dans la fabrication du bloc actif de la figure 3, l'épaisseur donnée aux pellicules 17 était égale à la largeur de l'entrefer. Dans un deuxième temps, par le polissage de la lame au cours de cette troisième opération, la longueur nécessaire pour l'entrefer est obtenue par l'usinage de la lame 20.

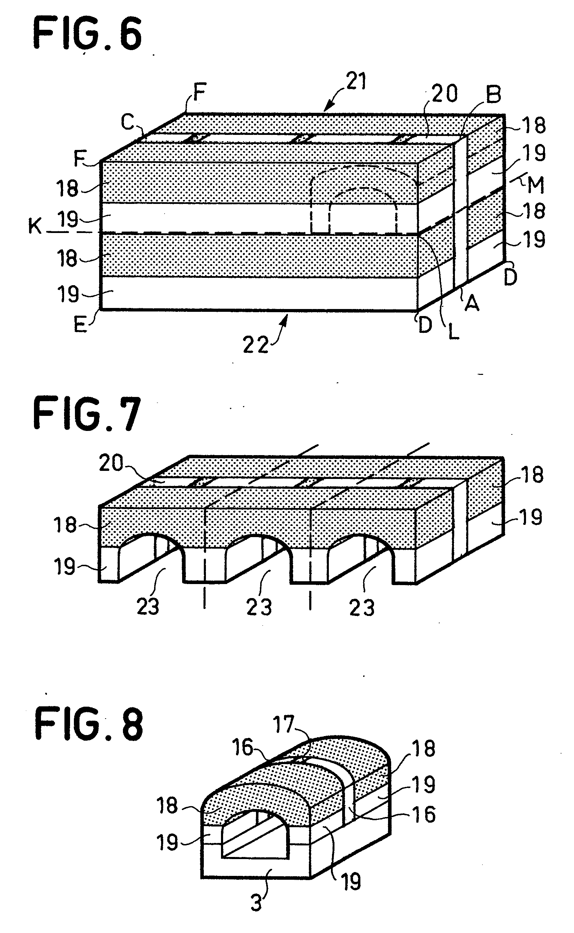

La figure 6 représente la quatrième étape de fabrication des têtes magnétiques.

Sur la pièce monolithique telle que représentée en figure 5 et constituée par la lame 20 rendue solidaire d'une tranche 21 est fixée, toujours par le même procédé de pressage à chaud, une seconde tranche 22, en tous points identique à la première tranche 21. Cette seconde tranche 22 est, d'une part, fixée sur la face demeurée libre de la lame 20, et, d'autre part, fixée de telle façon que les "fibres" magnétiques ou non magnétiques de la tranche 22 sont parallèles aux fibres magnétiques ou non magnétiques de la tranche 21. En outre, dans la pièce ainsi formée, à une fibre magnétique de la tranche 21 correspond une fibre magnétique de la tranche 22, la pièce étant symétrique par rapport au plan de la lame 20.

A l'issue de ces opérations de fabrication, on obtient donc un troisième bloc monolithique, puisque les ferrites sont frittées : ce bloc sera appelé par convention bloc composite pour le différencier du bloc actif et du bloc d'appui.

Le bloc composite est alors scié selon des plans perpendiculaires au plan de la lame 20, chaque sciage, selon le plan symbolisé en pointillé K, L, M isolant un ensemble composé de deux couches de ferrite non magnétique 18 et de ferrite magnétique 19. A titre d'exemple, puisque sur la figure 6 sont représentées quatre couches 18 et 19, le bloc est scié en deux.

Sur la figure 6 est évoqué en pointillé la face d'une future tête magnétique simple, telle qu'elle sera obtenue à la fin des opérations de fabrication.

Du recoupement de cette trace en pointillé et des couches de la figure 6 il ressort que les deux blocs d'appui 10 et 11 tels que représentés sur la figure 2, seront usinés dans les couches 18 de ferrite non magnétique, et que les deux embases 8 et 9, qui constituent une adaptation entre la largeur de la culasse 3 de la tête magnétique et celle des becs 7, seront usinés dans les couches 19 de ferrite magnétique.

La figure 7 représente la pièce obtenue après sciage du bloc composite de la figure 6.

Il a été dit que les figures étaient limitées à un petit nombre de couches de façon à être plus facilement lisibles, mais les différents blocs, en particulier le bloc composite, peuvent atteindre un grand nombre de couches telle que 10 ou 20 par exemple. Après sciage, il ne reste que des blocs comportant deux couches non magnétique 18 et magnétique 19.

Pour progresser dans la fabrication des têtes magnétiques selon l'invention, il est nécessaire après sciage du bloc composite, d'usiner des gorges 23, dans la couche magnétique 19, et perpendiculairement au plan de la lame 20. La profondeur des gorges 23 doit être suffisante pour séparer les couches magnétiques 19 en deux parties qui seront l'amorce du futur anneau magnétique de la tête magnétique terminée et pour obtenir un profil convenable des becs en matériau magnétique au voisinage de l'entrefer. A cet effet, on peut d'ailleurs pratiquer par usinage un amincissement supplémentaire de la zone magnétique 16 au droit de l'entrefer.

En outre, selon l'objet à fabriquer, c'est à dire selon qu'il s'agit de têtes simples ou de têtes multiples, le bloc représenté en figure 7 est scié pour obtenir des têtes simples ou laissé monolithique pour obtenir des têtes multiples ; la représentation de trois têtes et de trois entrefers sur la figure 7 n'est nullement limitative de l'invention.

La figure 8 représente une tête simple telle qu'elle est obtenue par le procédé selon l'invention, à l'issue de sa fabrication.

Pour achever une tête simple, il suffit d'une part de polir la face antérieure de la pièce composite monolithique obtenue après sciage selon la figure 7 et d'autre part d'ajouter une culasse arrière 3 et le ou les bobinages correspondants.

La comparaison entre la numérotation de la figure 2 et la numérotation de la figure 8 permet de voir que l'entrefer 12 de la figure 2 est composé par une couche 17 sur la figure 8, que les deux becs actifs 7 en figure 2 sont composés des deux couches 16 en figure 8, que les blocs d'appuis 10 et 11 en figure 2 sont composés par des couches 18 non magnétiques en figure 8 et qu'enfin les embases 8 et 9 en figure 2 sont composées par les couches magnétiques 19 en figure 8.

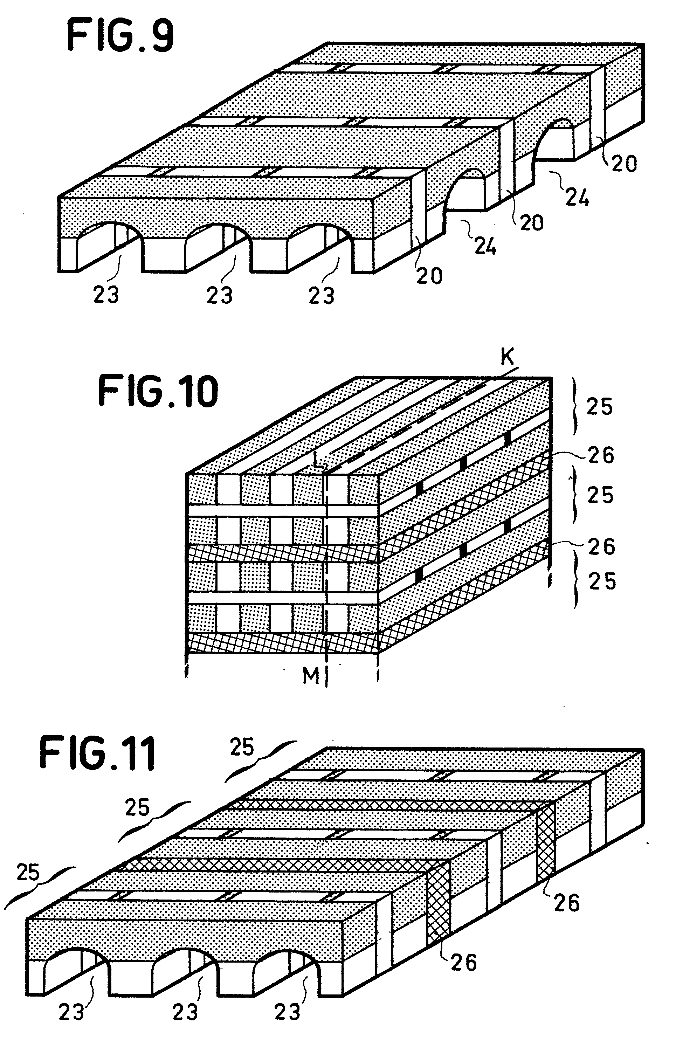

La figure 9 représente une tête multiple obtenue par le procédé de fabrication selon l'invention.

Deux cas se présentent. Si la tête multiple comporte une pluralité d'entrefers alignés selon une direction, cette tête est directement obtenue au cours de la cinquième étape de fabrication, selon la figure 7, après usinage des gorges 23.

Si la tête multiple comporte une pluralité d'entrefers selon un plan, et c'est le cas représenté en figure 9, il convient alors de répéter plusieurs fois l'opération qui a consisté à coller une lame du bloc actif sur une tranche du bloc d'appui, en vue d'obtenir un bloc composite monolithique comportant autant de lames 20 qu'il est nécessaire d'en obtenir dans la tête multiple. Ainsi, et sans que cela soit limitatif, la tête multiple de la figure 9 comporte trois lames 20.

La fabrication d'une tête multiple multipiste se poursuit par l'opération de rainurage : d'une part des rainures 23 pour chaque colonne de têtes magnétiques, ces rainures étant en tous points comparables à celles qui ont été décrites à l'occasion de la figure 7 ; et d'autre part, des rainures 24, situées entre les lignes de têtes magnétiques, ces rainures 24 étant suffisamment profondes pour séparer la couche de matériau magnétique et isoler ainsi les embases de chaque ligne de tête magnétique. La tête magnétique multiple multipiste selon figure 9 sera achevée par un usinage et polissage de la face active venant en regard du support magnétique défilant et par l'adjonction d'autant de culasses et de bobines qu'il y a de têtes magnétiques simples.

Les figures 10 et 11 représentent une première variante de réalisation de têtes magnétiques multiples et multipistes, cette première variante évitant l'opération de rainurage 24.

La figure 10 représente la structure d'un bloc composite multiple destiné à la fabrication des têtes selon cette première variante. Ce bloc composite est obtenu comme tous les blocs précédemment décrits par le frittage d'un empilement de blocs composites monolithiques repérés 25, qui ont été décrits à l'occasion de la figure 6. Mais, entre chacun des blocs 25 de l'empilement est placée une couche de matériau non magnétique repérée 26. Après que le bloc ait été soumis à pression et à la température, il est scié selon la trace repérée K L M, cette trace étant dans un plan perpendiculaire au plan des lames actives et des couches de matériau non magnétique 26.

La figure 11 représente la pièce ainsi obtenue par sciage d'un bloc monolithique composite selon la figure 10. La tête magnétique multiple et multipiste qui sera obtenue à partir de cette pièce comporte une pluralité de têtes magnétiques en ligne, chaque ligne étant constituée par un bloc composite 25. Les différentes têtes des différentes lignes sont isolées magnétiquement entre elles par la présence des couches non magnétiques 26 qui remplacent les gorges 24 effectuées sur la tête magnétique de la figure 9. Comme la tête magnétique multipiste précédente de la figure 9, celle-ci est achevée par l'usinage et polissage de la face active et mise en place d'une pluralité de culasses et de bobinages de façon à refermer l'anneau magnétique de chaque tête simple.

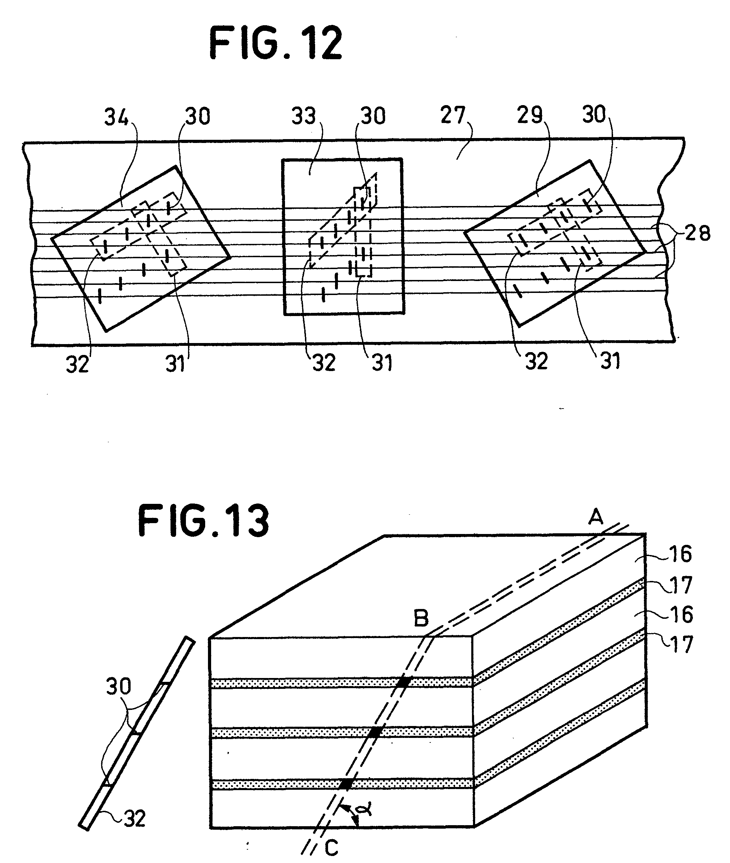

Les figures 12 et 13 représentent un second perfectionnement au procédé de fabrication de têtes magnétiques multiples et multipistes. Dans les exemples de réalisation qui ont été décrits jusqu'à présent, les plans de sciage selon les droites ABC ou DEF, ou KLM, sont perpendiculaires au plan des lames actives ou au plan principal des couches non magnétiques telle que la couche de séparation 26. De cet angle de coupe particulier, il ressort que les entrefers des têtes magnétiques sont alignés en lignes et en colonnes qui sont perpendiculaires entre elles. L'inconvénient de cet angle de coupe particulier qu'est l'angle droit ressort de la figure 12.

Sur cette figure, est représenté un fragment de support 27 avec une pluralité de pistes magnétiques 28. Une tête magnétique 29 multiple et multipiste, telle que fabriquée selon les exemples jusqu'à présent, comporte une pluralité d'entrefers 30 alignés selon des lignes 31 et des colonnes 32, lignes et colonnes se coupant à angle droit. Pour que chaque piste magnétique 28 soit lue par un entrefer 30 et un seul, il est nécessaire de présenter la tête magnétique 29 de biais par rapport aux pistes magnétiques, ce qui fait que les entrefers 30 ne sont pas perpendiculaires aux pistes magnétiques mais sont eux-mêmes légèrement de biais, ce qui présente un inconvénient pour la précision de la lecture ou de l'écriture.

Pour remettre la tête magnétique parallèlement au sens de défilement du support, ce qui est plus précis pour l'alignement des entrefers, il est possible de concevoir une tête telle que 33 dans laquelle les entrefers 30 sont alignés en lignes 31 et en colonnes 32 ne se coupant pas à angle droit. Ainsi, dans une même colonne 32, un entrefer possède un certain décalage par rapport à ses deux entrefers voisins, et chaque piste 28 se présente perpendiculairement par rapport aux entrefers 30. Dans la pratique, la réalisation d'une tête telle que 33 suppose, dans l'empilement des blocs composites 25 qui constituent le bloc de départ d'une tête multiple selon la figure 10, un décalage entre chaque entrefer d'une même colonne de l'ordre de 30 à 50 microns ce qui est beaucoup trop compliqué pour être réalisable industriellement.

La réalisation d'une tête magnétique telle que 34 est beaucoup plus simple et elle permet d'avoir des entrefers qui sont perpendiculaires aux pistes magnétiques 28. Dans la tête magnétique 34 telle que représentée sur la figure 12 les entrefers 30 sont groupés en lignes 31 et en colonnes 32 qui se recoupent à angle droit, mais les entrefers sont de biais par rapport aux lignes et aux colonnes, ce qui fait que les entrefers 30 sont perpendiculaires par rapport aux pistes magnétiques 28.

La figure 13 montre comment est obtenu ce résultat et cette structure de tête magnétique.

A partir d'un bloc actif tel que celui qui a été décrit en figure 3, et qui comporte un empilement de feuilles de matériau magnétique 16 et de couches de matériau non magnétique 17, les entrefers 30 étant constitués par un fragment de ces couches 17 non magnétiques, il suffit, pour obtenir des entrefers de biais par rapport à la tête magnétique, de scier une lame active selon un angle $\alpha$ par rapport aux plans principaux des feuilles magnétiques et des couches non magnétiques.

Cet angle α est déterminé par le nombre et l'écartement entre les pistes du support magnétique 27. Sur la figure 13, les couches non magnétiques 17 ont une certaine épaisseur de façon à ce qu'elles soient visibles, et cette épaisseur rend mal compte du positionnement des entrefers, c'est pourquoi sur le bord de la figure a été repris la coupe d'une lame active après sciage et la représentation des trois entrefers correspondants.

L'ensemble des exemples de réalisation et des figures s'appuie sur des compositions comportant par exemple deux couches et par exemple trois entrefers ou encore trois lignes et trois colonnes : ces exemples n'ont rien de limitatif à la portée de l'invention et n'ont pour objet que de simplifier l'exposé et les figures qui seraient trop compliqués par la représentation d'un trop grand nombre de couches magnétiques et couches non magnétiques. De façon générale, l'invention concerne la fabrication, par un procédé simple et de grande série, de têtes magnétiques à largeur de piste très étroite, ces têtes magnétiques pouvant être simples, ou multiple en ligne, ou multiple multipistes. De façon plus générale, l'invention est précisée par les revendications ci-après.

14

## REVENDICATIONS

1. Tête magnétique pour écriture, lecture et effacement sur piste magnétique étroite portée par un support défilant, constituée par un circuit magnétique en forme d'anneau comportant une partie postérieure ou culasse (3) qui supporte au moins un bobinage (4), et une partie antérieure comportant deux becs (7) séparés par un entrefer (12), cette tête magnétique étant caractérisée en ce que la face de travail de sa partie antérieure, en contact avec le support défilant, est constituée par une pièce en ferrite non magnétique (10 + 11 + 12) partiellement interrompue par deux fines lames en ferrite magnétique (7), dans le prolongement l'une de l'autre, orientées dans le sens de défilement du support défilant, et d'une épaisseur égale à la largeur de la piste magnétique, ces deux lames magnétiques (7) étant séparées l'une de l'autre par un entrefer (12) non magnétique qui constitue un pont entre les deux parties d'appui (13 et 14) de la surface non magnétique de travail, et étant de plus dotées de moyens d'adaptation (8, 9) à la largeur de la partie postérieure (3) de la tête magnétique, la partie antérieure de celle-ci étant monolithique.

2. Tête magnétique selon la revendication 1, caractérisée en ce que sa partie antérieure est constituée par un bloc monolithique composite comportant un premier bloc d'appui (10), non magnétique, une lame active elle-même composée de deux becs (7) magnétiques séparés par un entrefer (12) non magnétique et un second bloc d'appui (11), non magnétique, ainsi que deux embases (8 et 9), magnétiques, en contact avec chaque bec (7), qui constituent une adaptation entre les dimensions de chaque bec étroit et celles de la culasse (3), qui referme le circuit magnétique.

3. Procédé de fabrication de têtes magnétiques caractérisé en ce qu'il comprend la suite d'opération suivantes :

- fabrication d'un bloc dit "actif" par empilement de feuilles de ferrite magnétique (16) sur chacune desquelles a été préalablement déposé une couche de ferrite non magnétique (17), d'épaisseur égale à la largeur de l'entrefer (12) des têtes à fabriquer, l'empilement étant suivi d'une opération de frittage à chaud, en vue d'obtenir un bloc monolithique dans lequel est découpée une lame dite "active" (20) par sciage selon un plan (ABC) seccant par rapport au plan des couches de ferrite ;

- fabrication d'un bloc dit "d'appui" par empilement de plaques et couches alternées de ferrite magnétique (19) et non magnétique (18), suivi d'une opération de frittage à chaud, en vue d'obtenir un bloc monolithique dans lequel est découpée une première tranche (21) dite "d'appui" par sciage selon un plan (DEF) perpendiculaire au plan des couches de ferrite ;

- frittage par pressage à chaud d'une lame "active" (20) sur une tranche "d'appui" (21), les couches (16, 17) de la lame étant orientées perpendiculairement par rapport aux couches (18, 19) de la tranche, et rodage de la lame en vue de réduire son épaisseur égale à la longueur de l'entrefer (12) des têtes à fabriquer ;

- fabrication d'un bloc dit "composite" par empilement, sur la face restée libre de la lame (20), d'une seconde tranche "d'appui" (22), les couches (18, 19) des première et seconde tranches (21, 22) étant parallèles entre elles, suivi d'une opération de frittage à chaud, en vue d'obtenir un bloc monolithique dans lequel est découpé un bloc de tête multiple par sciage selon un plan (KLM) perpendiculaire à la lame (20) et parallèle aux couches de ferrite des tranches (21 et 22), le bloc de tête multiple obtenu comportant, pour chacune des tranches, une couche de ferrite non magnétique (18) et une couche de ferrite magnétique (19) ;

- usinage dans le bloc de tête multiple de gorges (23) perpendiculaires à la lame (20) en vue de façonner les becs des têtes, ces gorges ayant une profondeur supérieure à l'épaisseur de la couche de ferrite magnétique (19) et étant centrées, chacune, sur la couche de ferrite non magnétique (17) de la lame (20) ;

- sciage du bloc de tête multiple en têtes simples, usinage et polissage de la face de travail antérieure, et adjonction sur la face postérieure d'une culasse (3) et d'au moins une bobine (4).

4. Procédé de fabrication de têtes magnétiques multiples et multipistes, selon le procédé de fabrication de la revendication 3, caractérisé en ce que :

- la fabrication du bloc dit "composite" comprend l'empilement alterné d'une pluralité de lames (20), rodées à l'épaisseur voulue, et d'une pluralité de tranches (21), suivi d'une opération de pressage à chaud, et d'un sciage qui fournit un bloc de têtes multiples et multipistes, de l'usinage dans le bloc de têtes multiples et multipistes d'une première série de gorges (23) perpendiculaires aux lames (20), en vue de façonner les becs des têtes, suivi par l'usinage d'une seconde série de gorges (24), entre les lames (20) et parallèllement à celles-ci, en vue d'isoler magnétiquement les têtes formées dans une lame de celles formées dans les lames voisines ;

– le bloc de têtes multiples et multipistes reste monolithique, est poli sur sa face de travail antérieure, et complété sur sa face postérieure par une pluralité de culasses et de bobines.

5. Procédé de fabrication de têtes magnétiques multiples et multipiste selon le procédé de fabrication de la revendication 3, caractérisé en ce que l'étape de fabrication du bloc dit "composite" comprend l'empilement alterné d'une pluralité de lames (20), rodées à l'épaisseur voulue, et d'une pluralité de couches de matériau non magnétique (26), les lames (20) et les couches (26) non magnétiques étant régulièrement séparées par une tranche (21), les couches (26) non magnétiques remplaçant dans les opérations ultérieures la seconde série de gorges (24) qui isolent entre elles les têtes magnétiques.

6. Procédé de fabrication de têtes magnétiques multiples et multipistes selon l'une quelconque des revendications 4 ou 5, caractérisé en ce que le sciage dans le bloc dit "actif" d'une lame (20) est effectué selon un angle ( ) différent de 90° par rapport au plan des couches de ferrite, en vue d'obtenir une lame (20) dite "active" dans laquelle les couches de matériau non magnétique (17) formant entrefer sont inclinées d'un angle ($\alpha$) par rapport aux faces principales de la lame (20).

**FIG.1**

**FIG.2**

**FIG.3**

16
17
16
17

A
B
C

**FIG.4**

D
18
19
18
19

E
F

**FIG.5**

17 16 B
17 16
C
20
A
D
F E
21 19 18 19 18

**FIG.6**

**FIG.7**

**FIG.8**

FIG.9

23  23  23  20  24  24  20  20

FIG.10

K  25  26  25  26  25

M

FIG.11

25  25  25  26  26  23  23  23

**FIG. 12**

**FIG. 13**

0068995

Office européen
des brevets

**RAPPORT DE RECHERCHE EUROPEENNE**

Numéro de la demande

EP 82 40 1120

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| Y | DE-A-1 474 335 (GRUNDIG E.M.V.) * page 4, lignes 8-18; page 5, ligne 15 - page 8, lignes 2, 19-22; page 9, lignes 4-13; page 10, lignes 9-12, 20-22; page 11, lignes 1-12; figures 1-4 * & FR - A - 1 500 622 | 1,2 | G 11 B 5/221 G 11 B 5/28 |
| Y | IBM TECHNICAL DISCLOSURE BULLETIN, vol.13, no.12, mai 1971, Armonk N.Y., (US) R.T. REINHEIMER: "Sound head and mounting", pages 3610-3611 * page 3610, début du premier paragraphe, page 3611 - fin du premier paragraphe; figures A,B,C,D * | 1 | |
| Y | FR-A-1 272 521 (ELLIOTT BROTHERS) * page 2, colonne de droite, lignes 35-38; page 4, colonne de droite, lignes 28-33, ligne 55 - page 5, colonne de gauche, ligne 5; lignes 17-23, 37-40, 52-54; figures 1,6,9 * | 2 | **DOMAINES TECHNIQUES RECHERCHES (Int. Cl. 3)**  G 11 B |
| A | US-A-2 917 589 (KORNEI) * colonne 1, lignes 40-44; colonne 2, lignes 40-69; colonne 3, lignes 17-32; colonne 4, lignes 13-18; figures 1-7 * | 1,2 | |
| | -/- | | |

Le présent rapport de recherche a été établi pour toutes les revendications

| Lieu de la recherche | Date d'achèvement de la recherche | Examinateur |
|---|---|---|
| LA HAYE | 24-09-1982 | FUX J. |

OEB Form 1503. 03.82

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

# 0068995

Office européen
des brevets

**RAPPORT DE RECHERCHE EUROPEENNE**

Numéro de la demande

EP 82 40 1120

Page 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | DE-B-1 017 807 (SIEMENS & HALSKE) <br> * colonne 3, lignes 29-42; figures 1-3 * <br><br> --- | 2 | |
| Y | FR-A-2 133 209 (THOMSON-CSF) <br> * page 2, lignes 26-28; page 3, lignes 1-7, 24-30; page 4, lignes 4-37; page 5, lignes 3-5; figures 2,3,4,6,7,10,11 * <br><br> --- | 3-5 | |
| Y | US-A-3 601 871 (PIERCE) <br> * colonne 7, lignes 32-65; colonne 8, lignes 15-28; figures 22-29 * <br><br> --- | 3,5 | |
| Y | FR-A-2 394 138 (LCC-CICE) <br> * page 5, ligne 15 - page 6, ligne 27; page 8, lignes 7-13; figures 1-7 * <br><br> --- | 4 | **DOMAINES TECHNIQUES RECHERCHES (Int. Cl. ³)** |
| A | FR-A-2 053 903 (IBM) <br> * page 2, ligne 26 - page 3, ligne 26; page 4, ligne 40 - page 5, ligne 3; figures 1-9 * <br><br> --- | 1-5 | |
| A | US-A-3 710 038 (SAKAI et al.) <br><br> --- | 1 | |
| A | US-A-3 478 340 (SCHWARTZ et al.) <br> & FR - A - 1 512 096 <br><br> --- <br> -/- | 1,3 | |

Le présent rapport de recherche a été établi pour toutes les revendications

| Lieu de la recherche | Date d'achèvement de la recherche | Examinateur |
|---|---|---|
| LA HAYE | 24-09-1982 | FUX J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | US-A-3 760 494 (LANG, Jr.)<br><br>--- | 3 | |
| A | FR-A-2 140 243 (IBM)<br><br>----- | 6 | |
| | | | DOMAINES TECHNIQUES RECHERCHES (Int. Cl. ³) |
| | Le présent rapport de recherche a été établi pour toutes les revendications | | |

| Lieu de la recherche<br>LA HAYE | Date d'achèvement de la recherche<br>24-09-1982 | FUX J. | Examinateur |
|---|---|---|---|